# EUROPÄISCHE PATENTSCHRIFT

(11) **EP 1 526 013 B1**
(45) Veröffentlichungstag und Bekanntmachung des Hinweises auf die Patenterteilung: **03.01.2007**
(21) Anmeldenummer: 04021987.5
(22) Anmeldetag: 16.09.2004
(51) Int. Cl.: B60G 15/06

(54) **Federbein**
Suspension strut
Jambe de suspension

(30) Priorität: 21.10.2003 DE 10348861
(43) Veröffentlichungstag der Anmeldung: 27.04.2005
(73) Patentinhaber: ThyssenKrupp Bilstein Suspension GmbH, 58256 Ennepetal (DE); Dr. Ing. h.c. F. Porsche Aktiengesellschaft, 70435 Stuttgart (DE)
(72) Erfinder: Diederich, Manfred, Dipl.-Ing., 56769 Bereborn (DE); Kirch, Jan, Dipl.-Ing., 54294 Trier (DE); Schulz, Achim, Dr., 75223 Niefern-Öschelbronn (DE); Seibel, Maximilian, 71069 Sindelfingen (DE)
(74) Vertreter: Adams, Steffen

(56) Entgegenhaltungen:
- DE-A- 4 340 494
- DE-B- 10 227 713
- DE-C- 10 144 163
- DE-U- 8 510 058
- DE-U- 20 011 005
- FR-A- 2 657 301
- US-A- 4 683 993
- PATENT ABSTRACTS OF JAPAN Bd. 1996, Nr. 12, 26. Dezember 1996 (1996-12-26) & JP 08 219221 A (SHOWA:KK), 27. August 1996 (1996-08-27)

## Beschreibung

Die Erfindung betrifft ein Federbein, das einen Stoßdämpfer aufweist, der über einen angeschweißten Aufnahmering einen Federteller trägt.

Federbeine werden häufig bei lenkbaren Vorderrädern eingesetzt. Insbesondere bei sehr niedrig gebauten Fahrzeugen mit kurzen Dämpfungs- und Federwegen wird es erforderlich, den Federteller am Stoßdämpferrohr sehr hoch anzubinden. Daher kann es erforderlich sein, die Federbeine im oberen Bereich des Stoßdämpferrohres anzubinden, an dem der Kolbenstangenaustritt angeordnet ist. Das bringt Probleme bei der Montage eines derartigen Federbeins, da die Werkzeuge zum Verschließen des Stoßdämpferrohrs durch den Federteller räumlich begrenzt werden.

Aus der DE 198 51 019 C1 ist es bekannt, den Federteller indirekt über einen am Stoßdämpferrohr angeschweißten Aufnahmering zu befestigen. Das hat den Vorteil, dass der Federteller nach der Montage des Stoßdämpfers über den Aufnahmering am Stoßdämpferrohr befestigt werden kann. Nach der DE 198 51 019 ist als Verbindung zwischen Federteller und Aufnahmering eine Formschlussverbindung, vorzugsweise eine hohlnietartige Stanzverbindung, vorgesehen. Nachteilig dabei muss eine exakte Ausrichtung des Aufnahmeringes im Werkzeug erfolgen, damit die Nietung sicher durchgeführt werden kann. Weiterhin nachteilig ist die hier beschriebene formschlüssige Verbindung hinsichtlich ihrer Dauerhaltbarkeit, besonders bei der hohen Schwingbelastung, die auf die Anbindung eines Federtellers einwirkt, begrenzt.

Andere Befestigungsarten zwischen Federteller und Aufnahmering, wie beispielsweise Verschraubungen, sind sehr aufwändig in der Herstellung.

Aus der JP 08 219221 A ist ein Federbein bekannt, bei dem ein Federteller mit einer kreisförmigen Ausnehmung zur Aufnahme einer Hülse vorgesehen ist. Der Federteller ist mit der Hülse entlang der kreisförmigen Ausnehmung verschweißt. Die Hülse wiederum ist mit dem Stoßdämpferrohr nicht verschweißt, sondern formschlüssig, z.B. mittels eines Sprengrings, abgestützt. Bei einer derartigen Befestigung des Federtellers ist die Kraft, welche die Befestigung aufnehmen kann, vergleichsweise gering.

Aus der DE 43 40 494 A1 ist ein Federbein mit einem höhenverstellbaren Federteller bekannt. Der Federteller weist einen einrastbaren Haltering auf, der mit auf einer Hülse vorgesehenen Profilierungen zusammenwirkt. Auf diese Weise werden lösbare Rastmittel gebildet, die eine Höhenverstellung des Federtellers und seine Arretierung in einer neuen Axialposition gestatten. Die die Profilierungen tragende Hülse ist mit einem Träger verschweißt, der z.B. das Außenrohr eines Zweirohrstoßdämpfers sein kann. Eine stoffschlüssige Verbindung des Federtellers mit der Hülse ist beim Gegenstand der DE 43 40 494 A1 naturgemäß nicht vorgesehen, da ansonsten die Höhenverstellbarkeit des Federtellers nicht mehr gegeben wäre.

Der Erfindung liegt die Aufgabe zugrunde, die Anbindung eines Federtellers am oberen Ende eines Stoßdämpfers derartig zu verbessern, dass zum einen die Anbindung des Federtellers nach erfolgter Montage des Stoßdämpfers erfolgen kann. Zum anderen soll eine sichere, eine hohe Kraft aufnehmende Befestigung erzielt werden.

Diese Aufgabe wird erfindungsgemäß mit den Merkmalen des Anspruchs 1 gelöst. Eine vorteilhafte Weiterbildung ist im Unteranspruch 2 angegeben.

Die mit der Erfindung erzielten Vorteile bestehen insbesondere darin, dass eine sichere Anbindung eines Federtellers über einen Aufnahmering am Stoßdämpferrohr erzielt werden kann. Dabei kann der Stoßdämpfer fertig montiert, auch mit Dämpfungsflüssigkeit und Gas gefüllt sein. Besonders durch die Anordnung der beiden Schweißnähte an verschiedenen Bereichen des Aufnahmeringes ist gewährleistet, dass beim Anschweißen des Federtellers der Wärmeeintrag in die Einbauten des Stoßdämpfers und in die Dämpfungsflüssigkeit so gering ist, dass die Dämpfungsflüssigkeit keiner chemischen Veränderung unterworfen wird. Ebenso wird insbesondere die Dichtung zwischen Stoßdämpferrohr und Kolbenstange, die vorzugsweise mit Kunststofflippendichtungen versehen ist, nicht geschädigt.

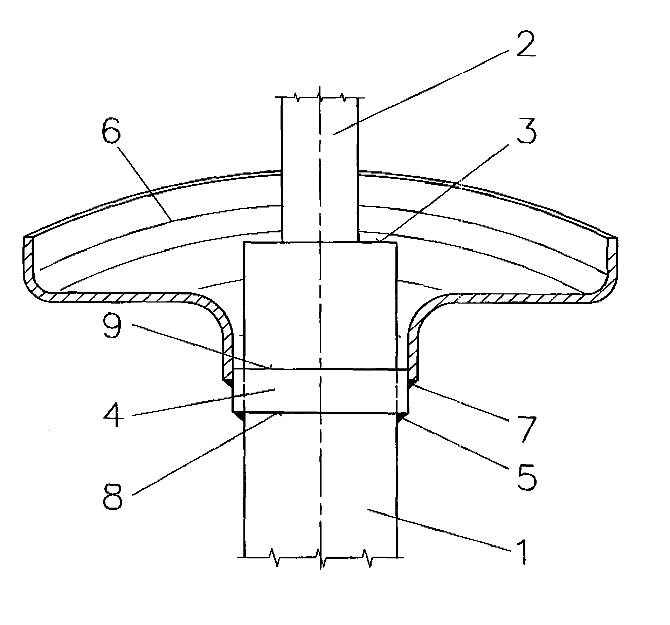

Ein Ausführungsbeispiel der Erfindung ist in der Zeichnung dargestellt und wird im Folgenden näher beschrieben. Die einzige Figur zeigt den Bereich eines Federbeins, in dem der Federteller mit dem Stoßdämpfer verbunden ist.

Der Stoßdämpfer ist nur schematisch dargestellt. Am Ende des Stoßdämpferrohrs 1, der alle Einbauten des Stoßdämpfers, sei es eines Einrohrstoßdämpfers oder eines Zweirohrstoßdämpfers, aufnimmt und der mit Stoßdämpferflüssigkeit und Gas im Ausgleichsraum befüllt ist, taucht eine Kolbenstange 2 oszillierend ein und aus. Von daher ist am Ende 3 des Stoßdämpferrohrs 1 eine nicht näher dargestellte Dichtungs- und Führungseinheit vorgesehen, die die Kolbenstange 2 gegenüber dem Stoßdämpferrohr 1 radial führt und abdichtet.

In der vorgesehenen Höhe ist ein Aufnahmering 4 über das Stoßdämpferrohr 1 aufgeschoben und mittels einer Schweißnaht 5 mit dem Stoßdämpferrohr 1 verbunden. Diese Verschweißung des Aufnahmeringes 4 mit dem Stoßdämpferrohr 1 erfolgt vor der Montage der Einbauteile in das Stoßdämpferrohr 1, ebenso wie vor dem Füllen des Stoßdämpfers mit Dämpfungsflüssigkeit und Gas im Ausgleichsraum.

Nach der fertigen Montage des Stoßdämpfers einschließlich des Befüllens mit Stoßdämpferflüssigkeit und Gas im Ausgleichsraum sowie nach dem Verschließen des Stoßdämpferrohrs 1 erfolgt die Montage des Federtellers 6 am Aufnahmering 4 mittels Schweißen. In einer bevorzugten Ausbildung sind die beiden Schweißnähte 5, 7 an den gegenüber liegenden Enden 8, 9 des Aufnahmeringes 4 oder zumindest in ihrer Nähe angeordnet. Durch diese Maßnahme wird erreicht, dass der Wärmeeintrag, der beim Herstellen der Schweißnaht 7 zwischen Federteller 6 und Aufnahmering 4 entsteht, nicht direkt in das Stoßdämpferrohr 1 und damit in den Stoßdämpfer und seine Einbauteile abfließen kann. Die Wärme muss erst durch den Aufnahmering 4 laufen, um dann über die Schweißnaht 5 zwischen Aufnahmering 4 und Stoßdämpferrohr 1 in das Stoßdämpferrohr 1 zu gelangen.

Vorteilhafterweise werden sowohl das Stoßdämpferrohr 1 als auch der Aufnahmering 4 und der Federteller 6 aus einem gleichartigen Material, beispielsweise Stahl oder Aluminiumlegierungen, hergestellt.

### Bezugszeichenliste

- 1.: Stoßdämpferrohr
- 2.: Kolbenstange
- 3.: Ende
- 4.: Aufnahmering
- 5.: Schweißnaht
- 6.: Federteller
- 7.: Schweißnaht
- 8.: Ende
- 9.: Ende

## Patentansprüche

1. Federbein mit einem eine Kolbenstange (2) und ein Stoßdämpferrohr (1) aufweisenden Stoßdämpfer, der über einen Aufnahmering (4) einen Federteller (6) trägt, wobei der Federteller (6) mittels Schweißen am Aufnahmering (4) befestigt ist, **dadurch gekennzeichnet, dass** sich eine Außenrandkontur des Federtellers (6) etwa über den Bereich des Kolbenstangenaustritts aus dem Stoßdämpferrohr (1) erstreckt, wobei ein dieser Außenrandkontur abgewandtes hülsenartiges Ende des Federtellers (6) mit dem Aufnahmering (4) verbunden ist und der Aufnahmering (4) einerseits mit dem Stoßdämpferrohr (1) über eine erste, dem freien Ende (3) abgekehrte Schweißung (5) vor einer Befüllung mit Dämpferflüssigkeit verbindbar ist und andererseits der Federteller (6) über eine zweite, dem freien Ende (3) zugerichtete Schweißung (7) mit dem Aufnahmering (4) nach Befüllung mit Dämpferflüssigkeit verbindbar ist und die beiden Schweißungen (5, 7) beabstandet zueinander an den oder in der Nähe der jeweils gegenüberliegenden Enden (8, 9) des Aufnahmerings (4) angeordnet sind.

2. Federbein nach Anspruch 1, **dadurch gekennzeichnet, dass** das Stoßdämpferrohr (1), der Aufnahmering (4) und der Federteller (6) aus einem gleichartigen Material bestehen.

## Claims

1. Suspension strut having a shock absorber which comprises a piston rod (2) and a shock absorber tube (1) and supports a spring seat (6) via a receiving ring (4), wherein the spring seat (6) is attached to the receiving ring (4) by means of welding, **characterised in that** an outer edge contour of the spring seat (6) extends from the shock absorber tube (1) approximately over the region where the piston rod exits, wherein a sleeve-like end of the spring seat (6) remote from this outer edge contour is connected to the receiving ring (4) and the receiving ring (4) can be connected on the one hand to the shock absorber tube (1) via a first weld (5) facing away from the free end (3) before being filled with damping fluid and on the other hand the spring seat (6) can be connected to the receiving ring (4) via a second weld (7) facing towards the free end (3) after being filled with damping fluid and the two welds (5, 7) are disposed at a spaced disposition with respect to each other on, or in proximity to, the opposite ends (8, 9) of the receiving ring (4) in each case.

2. Suspension strut as claimed in Claim 1, **characterised in that** the shock absorber tube (1), the receiving ring (4) and the spring seat (6) consist of a similar material.

## Revendications

1. Jambe de suspension qui présente un amortisseur doté d'une tige de piston (2) et d'un tube (1) d'amortisseur qui porte un ressort en plateau (6) par l'intermédiaire d'une bague de reprise (4), le ressort en plateau (6) étant fixé sur la bague de reprise (4) par soudage, **caractérisée en ce que** le contour de la bordure extérieure du ressort en plateau (6) s'étend sensiblement sur la zone de la sortie de la tige de piston hors du tube d'amortisseur (1), une extrémité du ressort en plateau (6), en forme de douille non tournée vers ce contour de la bordure extérieure, étant reliée à la bague de reprise (4) et d'une part la bague de reprise (4) pouvant être reliée au tube d'amortisseur (1) par une première soudure (5) non tournée vers l'extrémité libre (3) et ce avant le remplissage par du liquide d'amortissement, et d'autre part le ressort en plateau (6) pouvant être relié à la bague de reprise (4) par une deuxième soudure (7) orientée vers l'extrémité libre (3) après le remplissage par le liquide d'amortissement, les deux soudures (5, 7) étant disposées à distance l'une de l'autre sur les extrémités opposées (8, 9) de la bague de reprise (4) ou à proximité de ces extrémités opposées.

2. Jambe de suspension selon la revendication 1, **caractérisée en ce que** le tube d'amortisseur (1), la bague de reprise (4) et le ressort en plateau (6) sont constitués du même matériau.
